Europäisches Patentamt

European Patent Office

Office européen des brevets

(11) Numéro de publication: **0 380 434**
**A1**

## (12) DEMANDE DE BREVET EUROPEEN

(21) Numéro de dépôt: **90470002.8**

(22) Date de dépôt: **09.01.90**

(51) Int. Cl.⁵: **G07F 7/08, G07F 7/00, G07F 7/02**

(30) Priorité: **17.01.89 FR 8900634**

(43) Date de publication de la demande:
**01.08.90 Bulletin 90/31**

(84) Etats contractants désignés:
**AT BE CH DE ES FR GB GR IT LI LU NL SE**

(71) Demandeur: **SOCIETE DE FABRICATION D'APPAREILS AUTOMATIQUES ET DE SIROPS**
**Zone Industrielle Les Jonquières Ennery**
**F-57640 Vigy(FR)**

(72) Inventeur: **Ciekanski, François**
**1 Allée Grégor Mendel**
**F-54600 Villers Les Nancy(FR)**

(74) Mandataire: **Poupon, Michel**
**3, rue Thiers**
**F-88000 Epinal(FR)**

(54) **Procédé et dispositif pour la gestion et la commande d'un appareil automatique de distribution de produits ou services.**

(57) Procédé pour la gestion, dans un appareil fonctionnant par introduction de pièces de monnaie et/ou d'une carte à mémoire, de l'avoir du possesseur de ladite carte, caractérisé en ce qu'il consiste à prévoir des moyens pour l'interaction entre les moyens de paiement par monnaie et la carte à mémoire, ladite carte à mémoire étant du type carte à puce, celle-ci pouvant être ainsi recréditée par son possesseur, les informations de commande inscrites sur celle-ci pouvant également être modifiées par l'utilisateur.

Application : distributeurs automatiques de produits et services

# Procédé et dispositif pour la gestion et la commande d'un appareil automatique de distribution de produits ou services

La presente invention a pour objet un procédé pour la gestion, dans un appareil fonctionnant par introduction de pièces de monnaie et/ou d'une carte à mémoire, de l'avoir du possesseur de ladite carte. L'invention a également pour objet les appareils conformés pour la mise en oeuvre de ce procédé.

Le problème posé consiste à gérer le fonctionnement d'un appareil fonctionnant avec des pièces de monnaie et/ou d'une carte à mémoire et d'en faciliter l'accès aux utilisateurs réguliers ainsi qu'aux utilisateurs de passage.

De manière générale, les appareils de distribution, d'un produit ou d'un service, ne sont accessibles que par un seul moyen de paiement, ou alors sans intéraction entre les deux modes de commande.

Ainsi les cabines téléphoniques sont soit à pièces, soit à carte.

De même aux péages autoroutiers, le paiement peut être effectué par pièces ou par cartes. Il n'existe pas d'interface entre les deux moyens.

Pour la distribution de produits, tels que boissons, produits alimentaires, carburant, etc... le choix n'est pas non plus possible sur un même appareil, et en tout état de cause il n'existe pas de possibilité d'intéraction d'un mode sur l'autre ni de possibilité pour l'utilisateur de modifier les paramètres de fonctionnement à savoir essentiellement le crédit de sa carte.

La présente invention a pour objet de remédier à ces inconvénients des procédés et dispositifs de l'art antérieur.

Conformément à l'invention, on propose en effet un procédé pour la gestion, dans un appareil fonctionnant par introduction de pièces de monnaie et/ou d'une carte à mémoire, de l'avoir du possesseur de ladite carte, caractérisée en ce qu'il consiste à prévoir des moyens pour l'intéraction entre les moyens de paiement par monnaie et la carte à mémoire, ladite carte à mémoire étant du type carte à puce, celle-ci pouvant être ainsi recréditée par son possesseur, les informations de commande inscrites sur celle-ci pouvant également être modifiées par l'utilisateur.

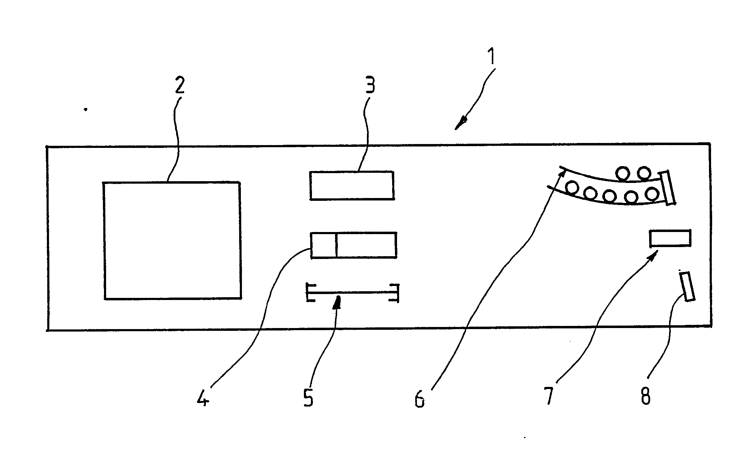

On comprendra mieux l'invention grâce à la description faite ci-après d'un mode de mise en oeuvre donné à titre d'exemple non limitatif, en référence à la vue schématique annexée (figure unique) d'un clavier d'automate de distribution mettant en oeuvre le procédé de l'invention et conforme à celle-ci.

Le clavier (1) de l'automate conforme à l'invention se compose de :

- un clavier de sélection de produit (2) ;
- un afficheur (3) d'instructions ou d'informations pour la lecture et la commande de la carte ;
- une touche "abonné" (4) pour la commande en fonctionnement pour un utilisateur habitué ;
- un introducteur et lecteur (5) de carte à puce ;
- un visualiseur (6) des pièces acceptées pour le paiement direct et le crédit de la carte ;
- un monnayeur (7) recevant les pièces, éventuellement complété par un lecteur de billets de banque ;
- un retour de pièces (8).

Dans ce qui suit, on fera référence à une carte dite "à puce", c'est-à-dire à microcalculateur, par exemple type CP8 BULL, ceci non limitativement et à un distributeur de boisson.

Pour la compréhension du fonctionnement, on définira d'abord le concept de clientèle amenée à utiliser ce type d'appareil :

- clientèle de passage : c'est le client occasionnel qui peut après paiement au monnayeur sélectionner le produit (par exemple boisson) de son choix sur le clavier ;
- client régulier (abonné) : il utilise une carte à micro calculateur pour effectuer les transactions.

Les fonctions assurées par le clavier de commande sont les suivantes.

Pour le client de passage , le monnayeur accepte uniquement les pièces de monnaie qui correspondent au paiement de la somme exacte indiquée sur le distributeur automatique. L'appareil peut être conçu pour rendre la monnaie.

Les autres pièces sont refusées et éjectées avec retour au consommateur.

La sélection du produit se fait au clavier après paiement.

Cette opération est répétitive pour chaque paiement avec sélection.

Pour le client habitué, l'appareil peut remplir de multiples fonctions :

- créditation et mémorisation de la boisson préférée sur la carte à puce : en utilisant le même monnayeur que ci-dessus, le client abonné (possesseur de la carte à puce), après avoir appuyé sur la touche ABONNE sur le clavier et introduit sa carte, il peut :

. créditer une somme d'argent sur la carte. Dans ce cas, le monnayeur accepte toutes les pièces de monnaie définies sur le monnayeur

. mémoriser sa boisson préférée sur sa carte à puce. (Cette opération lui permettra ultérieurement de ne pas sélecter au clavier sa boisson ; acces plus facile et gain de temps).

Ces deux opérations donnent droit à un nombre de "consommable" qui correspond au montant crédité et au prix de vente de la boisson mémorisée.

- paiement et sélection par carte à microcalculateur :

. usage normal : l'introduction de la carte à puce dans le lecteur de carte permet au consommateur si le crédit est suffisant de fabriquer la boisson mémorisée sur la carte. Le consommateur a ainsi une facilité d'accès au distributeur ainsi qu'un gain de temps.

. usage "échappatoire" : l'introduction de la carte à puce dans le lecteur de carte permet au consommateur, si le crédit est suffisant, de CHOISIR une autre boisson que celle mémorisée sur la carte, par l'intermédiaire du clavier de sélection. Cette boisson est dite "échappatoire". Si le prix de vente de la boisson "échappatoire" est différent de celui de la boisson mémorisée sur la carte, le décompte du nouveau crédit se fait automatiquement et reste en mémoire sur la carte à puce.

- changement de mémorisation du produit préféré : le consommateur peut également changer quand il le désire, la boisson mémorisée sur la carte. Si le prix de cette nouvelle boisson est différent, le nouveau crédit se calculera automatiquement et restera en mémoire sur la carte.

- les retours d'information en clair au consommateur :

. pour chaque opération décrite ci-dessus un guide opératoire s'affichera en clair (2x16 caractères alfanumériques) au consommateur ;

. les anomalies de fonctionnement ou messages techniques apparaîtront en clair ;

. à tout moment le crédit sur la carte est affiché.

La carte à puce assurera plusieurs fonctions et sera conçue par exemple comme suit :

. gestion de 5 prix de vente différents dont une ligne de prix en gratuité ;

. mémorisation possible de 128 x 24 = 3072 consommables, délivrés par tranche de consommable correspondant au montant crédité et au prix de vente de la boisson mémorisée ;

. montant des réévaluations de crédit : de 20 francs à 204,80 francs maximum

- nombre de réévaluations possible : 200 sur la durée de vie de la carte

- nombre de changements de mémorisation de la boisson préféréé : 50

La carte à puce pourra également gérer les promotions, remises et ristournes.

Ainsi par exemple :

- "avoir" servi pour un pré-encaissement important : un pourcentage d'intérêt sera servi automatiquement au consommateur sur sa carte en fonction du montant d'argent crédité lors de la réévaluation ;

- "avoir" pour consommateur : entre deux dates de réévaluation, on connaît le nombre de boissons consommées ainsi la carte se verra créditée d'un avoir qui correspond à un pourcentage de remise sur les prochaines consommations servies ;

- promotion :

. à la mise en service de la carte, un certain nombre de boissons au choix du consommateur seront servies gratuitement (test consommateur ) ;

. assurer la promotion d'une boisson limitée dans le temps à un prix préférentiel (gestion assurée par la carte) ;

. mémorisation de la date anniversaire du consommateur ; ainsi la carte servira un certain nombre de boissons gratuites au consommateur.

Les moyens de preuve du paiement sont gérés à deux niveaux :

- réévaluation du crédit (visualisée) ;
- crédit sur la carte elle-même.

Une trace écrite peut être imprimée et délivrée.

Une gestion totalement intégrée peut être effectuée à tous les niveaux tant celui de l'appareil lui-même que en amont, au niveau d'un outil de programmation et de gestion proprement dite de l'appareil.

Ainsi, pour l'outil de programmation et de gestion on peut intégrer les fonctions suivantes :

- affectation par programmation des produits de base

- affectation par programmation des boissons autorisées sur l'appareil

- affectation par programmation des touches sur l'appareil

- affectation par programmation du dosage des boissons

- affectation par programmation des lignes de prix des boissons

- affectation par programmation des codes de gratuité

- affectation des informations en retour pour assurer la gestion d'un part d'appareils.

On peut ainsi initialiser toutes les utilisations de la carte à mémoire. On peut également en intégrant ces différentes informations contrôler les données statistiques, déclencher les approvisionnements et calculer les rentabilités.

De la même manière on peut intégrer tout ce qui concerne la vie de la carte (carte à microcalculteur) à savoir par exemple :

- ouverture automatique des lignes de prix en fonction de la boisson sélectionnée ;

- mémorisation de la boisson préférée,

- mémorisation du dosage dans la boisson préférée,

- prise en compte des habitudes de consommation pour effectuer automatiquement l'avoir,

- incrémentation des gratuités en nombre de boissons.

On peut ainsi gérer la validation du crédit en valeur, la validation du débit en nombre de boissons par ligne de prix, le calcul automatique du solde.

**Revendications**

1. Procédé pour la gestion, dans un appareil fonctionnant par introduction de pièces de monnaie et/ou d'une carte à mémoire, de l'avoir du possesseur de ladite carte, caractérisé en ce qu'il consiste à prévoir des moyens pour l'intéraction entre les moyens de paiement par monnaie et la carte à mémoire, ladite carte à mémoire étant du type carte à puce, celle-ci pouvant être ainsi recréditée par son possesseur, les informations de commande inscrites sur celle-ci pouvant également être modifiées par l'utilisateur.

2. Appareil automatique de distribution de produits ou services pour la mise en oeuvre du procédé selon la revendication 1, caractérisé en ce qu'il comporte :
- un clavier de sélection de produit (2) ;
- un afficheur (3) d'instructions ou d'informations pour la lecture et la commande de la carte ;
- une touche "ABONNE" (4) pour la commande en fonctionnement pour un utilisateur habitué ;
- un introducteur et lecteur (5) de carte à puce ;
- un visualiseur (6) des pièces acceptées pour le paiement direct et le crédit de la carte ;
- un monnayeur (7) recevant les pièces, éventuellement complété par un lecteur de billets de banque ;
-un retour de pièces (8).

3. Appareil automatique selon la revendication 2, caractérisé en ce que le crédit est porté en valeur sur la carte, que la quantité de produits est portée en débit par ligne de prix et que le solde est effectué en permanence sur ladite carte.

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5 ) |
|---|---|---|---|
| Y | DE-A-3533740 (ROBERT BOSCH) <br> * abrégé; revendications 1-8; figures 1, 2 * | 1, 2 | G07F7/08 <br> G07F7/00 |
| A | --- | 3 | G07F7/02 |
| Y | WO-A-8807727 (VERTX) <br> * abrégé; figure 1 * <br> * page 4, ligne 18 - page 5, ligne 33 * <br> * page 7, lignes 17 - 30 * <br> * page 25, ligne 13 - page 32, ligne 33 * | 1, 2 | |
| A | FR-A-2503423 (FLONIC) <br> * page 13, ligne 1 - page 15, ligne 30 * <br> * page 19, ligne 9 - page 20, ligne 29; <br> revendications 1-10; figure 2 * | 1, 3 | |
| A | FR-A-2592975 (ELECTRONIQUE MARCEL DASSAULT) <br> --- | | |
| A | US-A-4669596 (J.G. CAPERS) <br> --- | | |
| A | GB-A-2067467 (D. EASTWOOD) <br> ----- | | |

|  |  |  | **DOMAINES TECHNIQUES RECHERCHES (Int. Cl.5 )** |
|---|---|---|---|
|  |  |  | G07F |

Le présent rapport a été établi pour toutes les revendications

| Lieu de la recherche | Date d'achèvement de la recherche | Examinateur |
|---|---|---|
| LA HAYE | 25 AVRIL 1990 | DAVID J.Y.H. |